# FASCICULE DE BREVET EUROPEEN

(11) **EP 2 115 854 B1**
(45) Date de publication et mention de la délivrance du brevet: **01.08.2012**
(21) Numéro de dépôt: 07872025.7
(22) Date de dépôt: 21.12.2007
(51) Int. Cl.: H02K 1/22, H02K 15/02

(54) **ROTOR DE MACHINE ELECTRIQUE TOURNANTE COMPORTANT UNE CHAINE OUVERTE D'AU MOINS DEUX ELEMENTS INTERPOLAIRES FORMANT BARRIERE MAGNETIQUE**
ROTOR FÜR EINE ELEKTRISCHE ROTATIONSMASCHINE MIT OFFENER KETTE VON MINDESTENS ZWEI EINE MAGNETISCHE BARRIERE DEFINIERENDEN INTERPOLAREN ELEMENTEN
ROTOR FOR A ROTARY ELECTRIC MACHINE INCLUDING AN OPEN CHAIN OF AT LEAST TWO INTERPOLAR MEMBERS DEFINING A MAGNETIC BARRIER

(30) Priorité: 30.01.2007 FR 0752970
(43) Date de publication de la demande: 11.11.2009
(73) Titulaire: Valeo Equipements Electriques Moteur, 94046 Créteil Cedex (FR)
(72) Inventeur: PFLEGER, Alexandre, F-93160 Noisy-Le-Grand (FR); GAS, Olivier, F-75017 Paris (FR)
(74) Mandataire: de Lambilly Delorme, Marie Pierre
(86) Numéro de dépôt international: PCT/FR2007/052616
(87) Numéro de publication internationale: WO 2008/093032

(56) Documents cités:
- FR-A1- 2 737 617
- US-A- 5 793 144
- US-A1- 2004 036 376

## Description

L'invention se rapporte à un rotor de machine électrique tournante dans lequel sont agencés au moins deux éléments interpolaires formant barrière magnétique.

L'invention se rapporte plus particulièrement à un rotor de machine électrique tournante, notamment pour véhicule automobile, qui est destiné à être monté rotatif autour d'un axe de rotation d'orientation axiale, et qui comporte :
- une roue polaire avant et une roue polaire arrière qui sont montées centrées sur l'axe de rotation ;
- des griffes qui s'étendent axialement en direction de l'autre roue polaire depuis une base agencée à la périphérie de chaque roue polaire jusqu'à une extrémité libre, chaque griffe d'une roue polaire étant imbriquée circonférentiellement entre deux griffes périphériques axiales adjacentes de l'autre roue polaire, chaque griffe étant délimitée circonférentiellement par deux face latérales ;
- au moins deux espaces interpolaires qui sont réservés entre les faces latérales en vis-à-vis de deux griffes consécutives de chaque roue polaire ;
- au moins deux éléments formant barrière magnétique qui sont agencés dans deux espaces interpolaires associés de part et d'autre d'une griffe déterminée de la roue polaire arrière.

On connaît déjà des rotors de machine électrique tournante de ce type. Lors de l'utilisation d'une machine électrique tournante équipée d'un tel rotor, les griffes de chaque roue polaire forment des pôles magnétiques, par exemple nord pour la roue polaire avant, et sud pour la roue polaire arrière. Le flux magnétique qui circule des pôles d'une roue aux pôles de l'autre roue polaire, passe par des boucles formées par un bobinage de stator qui entoure le rotor.

Une telle machine électrique tournante est par exemple un alternateur qui est utilisé pour produire du courant électrique dans le bobinage du stator lorsque le rotor est entraîné mécaniquement en rotation.

Pour empêcher le flux magnétique émis par ces pôles de court-circuiter les boucles du bobinage de stator, il est connu d'interposer des aimants permanents formés par des éléments ferromagnétiques entre deux pôles opposés consécutifs du rotor.

Cependant, le montage des aimants un à un dans le rotor peut s'avèrer complexe et onéreux.

Il est connu de résoudre ce problème, par exemple par le document EP-A-0.866.542, en agençant les aimants dans des supports reliés entre eux de manière à former une ceinture fermée. Ainsi, la ceinture d'aimants peut être montée sur le rotor en une seule opération.

La solution proposée est adaptée lorsque tous les espaces interpolaires sont équipés d'un aimant. Cependant, il existe de nombreux types de rotor dans lesquels seule une partie des espaces interpolaires est équipée d'aimants.

De plus, les supports d'aimant sont reliés entre eux par un lien qui est destiné à être agencé sous la face intérieure de chaque griffe du rotor de manière à retenir les aimants lors de la rotation du rotor. De ce fait, les liens doivent avoir des dimensions suffisantes pour résister aux efforts exercés par la force centrifuge.

Or, de tels liens sont encombrants et ils alourdissent le rotor. Ainsi, le rendement de la machine électrique tournante s'en trouve affecté.

Le document EP-A-1.117.168 propose de monter les aimants par paire de part et d'autre d'une griffe déterminée dans le rotor afin de simplifier le montage d'aimants dans seulement une partie des espaces interpolaires du rotor. A cet effet, ce document propose d'agencer les éléments dans des supports qui sont reliés entre eux par une membrure de liaison.

Cette membrure est destinée à être agencée sous la face intérieure de la griffe déterminée. La membrure a pour fonction de retenir les aimants lors de la rotation du rotor. Les problèmes concernant le poids du rotor ne sont donc pas résolus par ce document.

Par ailleurs la demande internationale WO 00/33440 décrit un rotor comprenant des aimants maintenus à l'aide de deux bandes parallèles. Le document FR 2 737 617 divulgue une ossature d'un seul tenant comportant des aimants permanents de renforcement de flux rotorique.

Le document FR 2 737 617 divulgue une ossature d'un seul tenant comportant des aimants permanents de renforcement de flux rotorique.

L'invention propose donc de résoudre notamment ces problèmes en proposant un rotor comportant un agencement léger pour le montage des éléments formant barrière magnétique dans des espaces interpolaires du rotor du type décrit précédemment, caractérisé en ce que les extrémités longitudinales avant desdits deux éléments formant barrière magnétique sont reliées ensembles, notamment de manière à former une chaîne ouverte, par l'intermédiaire d'une attache qui est liée par chacune de deux extrémités auxdites extrémités longitudinales avant des éléments formant barrière magnétique et qui est de préférence destinée à chevaucher axialement l'extrémité libre de la griffe déterminée.

Selon d'autres caractéristiques de l'invention :
- chaque extrémité de l'attache est liée à l'élément formant barrière magnétique associé par l'intermédiaire d'un support qui est destiné à porter un élément formant barrière magnétique ;
- l'attache est articulée de manière à former une charnière pivotante autour d'au moins un axe radial de manière que les éléments formant barrière magnétique soient pivotants l'un par rapport à l'autre ;
- l'attache est réalisée en un matériau thermiquement fusible de manière à relier de façon temporaire les éléments formant barrière magnétique ;
- l'attache est reliée de manière définitive aux éléments formant barrière magnétique ;
- l'attache est réalisée en un matériau plastique ;
- les supports sont réalisés en matériau plastique venus de matière avec l'attache ;
- chaque support est surmoulé autour de l'élément formant barrière magnétique associé ;
- l'articulation de l'attache est réalisée par au moins un film de matériau plastique qui est venu de matière avec l'attache ;
- l'attache est réalisée en un matériau métallique amagnétique ;
- chaque support est réalisé en un matériau métallique amagnétique venu de matière avec l'attache ;
- l'attache comporte des moyens de positionnement sur la griffe déterminée qui sont destinés à coopérer par emboîtement de forme complémentaires avec des moyens de positionnement associés de l'extrémité libre de la griffe déterminée ;
- l'attache comporte une pale qui s'étend axialement dans une direction opposée à la griffe déterminée de manière à former une pale de ventilation lors de la rotation du rotor ;
- l'attache comporte un embout qui est destiné à obturer une échancrure comprise entre la base des deux griffes adjacentes à la griffe déterminée de manière à empêcher l'entrée en résonance de certaines vibrations lors de la rotation du rotor ;
- la chaîne ouverte d'éléments formant barrière magnétique comporte au moins un troisième élément formant barrière magnétique ;
- le bord extérieur d'au moins une face latérale de chaque espace interpolaire comporte un rebord qui s'étend circonférentiellement vers l'intérieur de l'espace interpolaire de manière à retenir radialement l'élément formant barrière magnétique associé à l'encontre de la force centrifuge lorsque le rotor est en rotation ;
- l'élément formant barrière magnétique est un aimant permanent, notamment en matériau ferromagnétique.

L'invention propose aussi un procédé de montage d'un rotor de machine électrique tournante, caractérisé en ce qu'il comporte une première étape d'assemblage d'une chaîne ouverte d'aimants sur le rotor et une deuxième étape d'aimantation des aimants

Avantageusement le ou les supports sont différents d'une feuille. Ce ou ces supports sont, si on le souhaite, non flexibles et/ou non pliables.

Dans un exemple de mise en oeuvre de l'invention, deux aimants voisins sont reliés seulement à l'une de leurs extrémités, et non à leurs deux extrémités.

Chaque chaîne ouverte d'aimants comporte par exemple exactement deux aimants. Autrement dit les aimants sont par exemple reliés deux à deux via une attache.

Le ou les supports d'aimants sont notamment réalisés en matériau amagnétique.

Chaque aimant dans un espace interpolaire peut être formé à partir d'une seule pièce ou, en variante, de plusieurs pièces.

Selon d'autres caractéristiques du procédé :
- la deuxième étape d'aimantation est réalisée après la première étape d'assemblage ;
- la deuxième étape d'aimantation est réalisée avant la première étape de montage, de manière que les faces radiales polaires en vis-à-vis des aimants de la chaîne ouverte forment des pôles de même type qui se repoussent mutuellement.

D'autres avantages et caractéristiques apparaîtront au cours de la lecture de la description détaillée qui va suivre pour la compréhension de laquelle on se reportera aux dessins annexés parmi lesquels :
- la figure 1 est une vue en coupe axiale d'un alternateur muni d'un rotor ;
- la figure 2 est une vue axiale qui représente le corps de stator de l'alternateur de la figure 1 ;
- la figure 3 est une vue en perspective qui représente les deux roues polaires du rotor de la figure 1 entre lesquelles est agencé une chaîne ouverte de deux aimants réalisée selon un premier mode de réalisation ;
- la figure 4 est une vue en plan qui représente deux griffes des deux roues polaires qui sont imbriquées l'une dans l'autre ;
- la figure 5 est une vue en coupe radiale selon le plan de coupe 5-5 de la figure 3 qui représente les deux aimants ;
- la figure 6 est une vue en perspective à plus grande échelle qui représente la chaîne ouverte de deux aimants de la figure 3 ;
- la figure 7 est une vue en perspective en opposition de la chaîne ouverte représentée à la figure 6 ;
- la figure 8 est une vue similaire à celle de la figure 3 dans laquelle la chaîne ouverte d'aimants est réalisée selon un deuxième mode de réalisation ;
- la figure 9 est une vue en perspective à plus grande échelle qui représente la chaîne ouverte de deux éléments de la figure 8 ;
- la figure 10 est une vue en perspective similaire à celle de la figure 9 dans laquelle la chaîne ouverte comporte trois aimants ;
- la figure 11 est une vue en perspective similaire à celle de la figure 8 dans laquelle la chaîne ouverte comporte une pale de ventilation ;
- la figure 12 est une vue en perspective plus grande échelle qui représente la chaîne ouverte de la figure 11 ;
- la figure 13 est une vue similaire à celle de la figure 11 dans laquelle la chaîne ouverte comporte un embout qui est destiné à obturer une échancrure d'une des roues polaires ;
- la figure 14 est une vue en perspective à plus grande échelle qui représente plus en détail la chaîne ouverte de la figure 13 ;
- la figure 15 est une vue en perspective en opposition de la chaîne ouverte représentée à la figure 14 ;
- la figure 16 est une vue en perspective similaire à celle de la figure 3 qui représente un agencement d'un aimant unique dans un rotor, l'aimant étant porté par un support individuel équipé d'une pale de ventilation ;
- la figure 17 est une vue en perspective similaire à celle de la figure 16 qui représente l'aimant qui est porté par un support individuel équipé d'un embout d'obturation de l'échancrure d'un des roues polaires ;
- la figure 18 est une vue en perspective à plus grande échelle qui représente l'aimant de la figure 17 dans son support ;
- la figure 19 est une vue en perspective en opposition de l'aimant de la figure 18.

Dans la suite de la description, des éléments analogues, similaires ou identiques seront désignés par des mêmes numéros de référence.

Dans la suite de la description on adoptera de manière non limitative un premier repère comportant une orientation axiale indiquée par la flèche "A" aux figures qui est dirigée d'arrière en avant, des orientations radiales qui s'étendent perpendiculairement à l'axe d'orientation axiale du rotor et qui sont notamment indiquées par la flèche "R" qui est dirigée de l'intérieur vers l'extérieur, et une orientation circonférentielle qui est orthogonal aux orientations axiale "A" et radial "R" et qui est indiquée par la flèche "T".

Dans la suite de la description, on adoptera aussi un deuxième repère local se rapportant à chaque aimant et comportant une orientation radiale "R" identique à l'orientation radiale "R" du premier repère, une orientation longitudinale "L" qui forme un angle "α" avec l'orientation axiale "A" de manière à être dirigée selon l'axe principal de l'aimant associé, et une orientation transversale qui est perpendiculaire aux directions radiale "R" et longitudinale "L".

Par ailleurs, des faces radiales orientées vers le milieu du rotor seront qualifiées de faces internes tandis que les faces orientées dans un sens opposé seront qualifiées de faces externes. De même, des faces axiales orientées vers l'axe de rotation de l'arbre seront qualifiées de faces intérieures tandis que des faces axiales orientées dans un sens opposé seront qualifiées de faces extérieures.

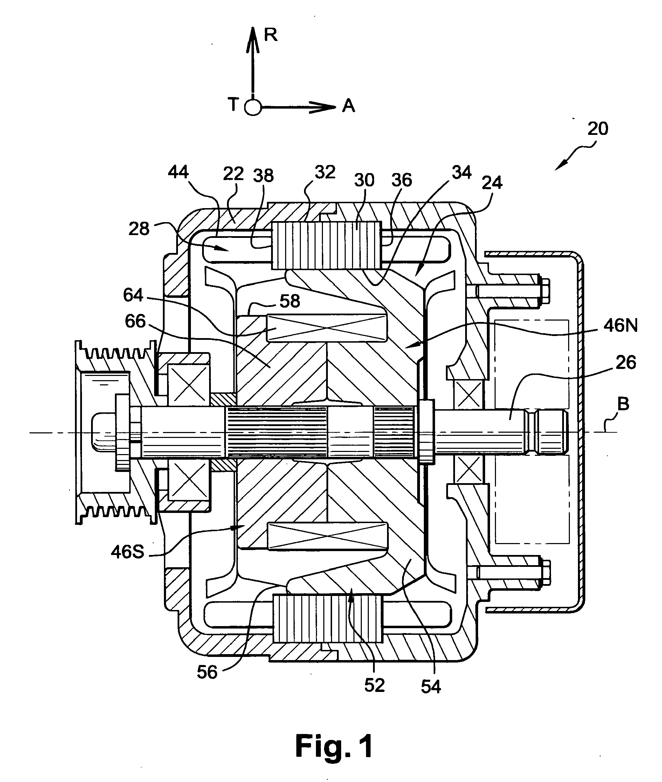

En se reportant à la figure 1, on a représenté une machine électrique tournante 20, dans le cas présent un alternateur du type polyphasé pour véhicule automobile à moteur thermique. Bien entendu l'alternateur peut aussi être réversible et consister en un alterno-démarreur notamment pour démarrer le moteur thermique du véhicule.

Lorsque la machine électrique tournante 20 fonctionne en mode alternateur, elle transforme de l'énergie mécanique en énergie électrique comme tout alternateur.

Lorsque la machine électrique tournante 20 fonctionne en mode moteur électrique, notamment en mode démarreur pour démarrer le moteur thermique du véhicule, elle transforme de l'énergie électrique en énergie mécanique.

Cette machine électrique tournante 20 comporte essentiellement un carter 22 et, à l'intérieur de celui-ci, un rotor 24 qui comporte un arbre central 26. L'arbre central 26 est monté à rotation par rapport au carter 22 autours de son axe de rotation d'orientation axiale "B". Le carter 22 renferme aussi un stator 28 qui entoure le rotor 24.

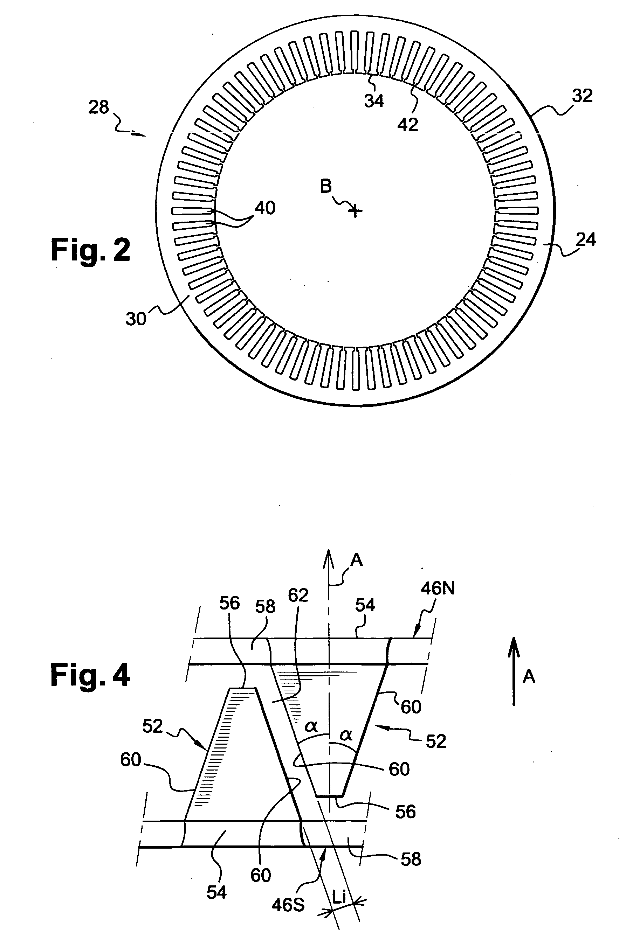

Comme représenté à la figure 2, le stator 28 comporte un corps annulaire 30 cylindrique coaxial avec le rotor 24. Le stator 28 est formé d'un paquet de tôles empilées axialement. Le corps annulaire 30 est délimité radialement par une face cylindrique extérieure 32 et par une face cylindrique intérieure 34, et il est délimité axialement par une face annulaire radiale avant 24 et par une face annulaire radiale arrière 26.

Le corps annulaire 30 comporte une pluralité d'encoches 40 qui s'étendent axialement de manière débouchante dans chacune des faces radiales avant 24 et arrière 26. Le corps annulaire 30 est ici du type semi-fermé, c'est-à-dire que chaque encoche 40 débouche aussi radialement dans la face cylindrique intérieure 34 par l'intermédiaire d'une fente axiale 42 pour permettre le montage d'un bobinage de stator 44 formant de part et d'autre du corps annulaire 30 des chignons.

Ce bobinage de stator 44 est par exemple un bobinage hexaphasé qui comporte alors un jeu de six enroulements de phase. Les sorties du bobinage de stator 44 sont reliées à un pont redresseur (non représenté) comportant des éléments redresseurs tels que des diodes ou des transistors du type MOSFET, notamment lorsque la machine électrique tournante 20 est du type réversible et consiste en un alterno-démarreur comme décrit par exemple dans le document FR-A-2.725.445 (US-A-6.002.219).

Chaque enroulement de phase est obtenu à l'aide d'un fil continu, électriquement conducteur, revêtu d'une couche isolante et monté dans des séries d'encoches 40 associées du corps annulaire 30 du stator 28. Dans le mode de réalisation représenté aux figures, le bobinage de stator 44 comporte six enroulements de phase, et le fil conducteur d'un enroulement de phase est inséré toutes les six encoches 40.

Selon une variante, pour réduire le taux d'ondulation et les bruits magnétiques, le bobinage de stator 44 comporte deux jeux d'enroulements triphasés pour former un dispositif d'enroulements composites de stator, les enroulements étant décalés de trente degrés électriques comme décrit par exemple dans les documents US-A1-2002/0175589, EP-0.454.039 et FR-A-2.784.248. Dans ce cas il est prévu deux ponts redresseurs et toutes les combinaisons d'enroulements triphasés en étoile et/ou en triangle sont possibles.

Il est à noter que, dans l'exemple de réalisation décrit, le rotor 24 comporte huit paires de pôles. Il est donc prévu quarante-huit encoches 40 dans le corps annulaire 30 du stator 28 dans le cas dans lequel il est prévu deux jeux d'enroulements triphasés comme décrit dans le document FR-A-2.737.063 précité, ou quatre-vingt-seize encoches 40 dans les solutions décrites dans les documents US-A1-2002/0175589 et EP-A1-0.454.039 précités.

Bien entendu le rotor 24 peut, selon les applications, comporter un nombre différent de paires de pôles.

Selon une variante non représentée, pour un meilleur remplissage des encoches 40 du corps annulaire 30 du stator 28, les enroulements sont réalisés à l'aide de conducteurs en forme de barres, tel que des épingles, reliées entre elles par exemple par soudage.

Le rotor 24 est un rotor à griffes, comme décrit par exemple dans les documents US-A1-2002/0175589 et EP-A1-0.454.039, comprenant une première roue polaire avant 46N et une deuxième roue polaire arrière 46S qui sont axialement juxtaposées. Chaque roue polaire 46N, 46S comporte un plateau 48 radial de forme circulaire pourvu d'un orifice central 50 de passage de l'arbre central 26. Les roues polaires 46N, 46S sont ainsi montées centrées sur l'arbre central 26. Chaque roue polaire 46N, 46S est liée en rotation avec l'arbre central 26.

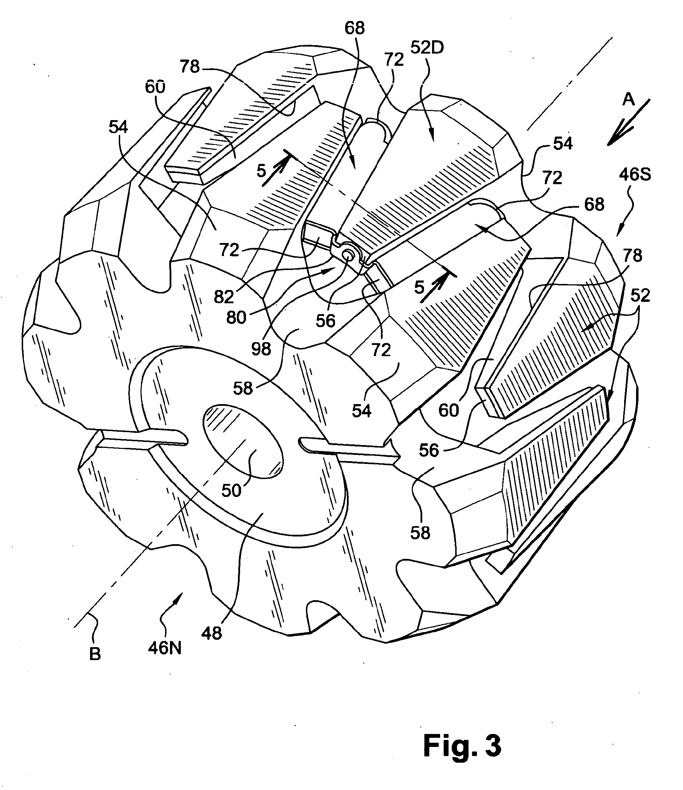

Comme représenté à la figure 3, chaque roue polaire 46N, 46S comporte aussi des griffes 52 qui s'étendent axialement en direction de l'autre roue polaire 46N, 46S depuis une base 54 qui est agencée à la périphérie extérieure du plateau 48 jusqu'à une extrémité libre 56. Chaque roue polaire 46N, 46S comporte ici huit griffes 52.

Selon une variante non représentée, chaque roue polaire 46N, 46S comporte six griffes 52.

Les griffes 52 sont réparties régulièrement sur le pourtour du plateau 48 de la roue polaire 46N, 46S. Toutes les griffes 52 sont ici identiques.

Chaque roue polaire 46N, 46S comporte des échancrures 58 qui sont délimitées circonférentiellement par la base 54 de deux griffes 52 adjacentes.

Comme illustré à la figure 4, chaque griffe 52 a une forme trapézoïdale convergeant depuis la base 54 jusqu'à l'extrémité libre 56. Chaque griffe 52 est délimitée circonférentiellement par deux faces latérales 60 radiales. Plus particulièrement, chaque griffe 52 forme ici un triangle isocèle tronqué dont le sommet forme l'extrémité libre 56 de la griffe 52 et dont la base est formée par la base 54 de la griffe 52. Chaque face latérale 60 forme ainsi un même angle "α" par rapport à la direction axiale "A". Par la suite, cet angle "α" sera appelé "angle de griffe".

Chaque griffe 52 d'une roue polaire 46N, 46S est imbriquée circonférentiellement entre deux griffes 52 périphériques axiales adjacentes de l'autre roue polaire 46N, 46S de manière que chaque face latérale 60 des griffes 52 de la roue polaire avant 46N soit agencée en vis-à-vis d'une face latérale 60 d'une griffe 52 de la roue polaire arrière 46S et réciproquement. Les griffes 52 des deux roues polaires 46N, 46S étant identiques, les faces latérales 60 en vis-à-vis sont sensiblement parallèles.

Ainsi, l'extrémité libre 56 de chaque griffes 52 d'une roue polaire 46N, 46S est agencée en vis-à-vis d'une échancrure 58 associée de l'autre roue polaire 46S, 46N.

Les griffes 52 de la roue polaire avant 46N sont destinées à former des pôles magnétiques d'un premier signe, par exemple nord, tandis que les griffes 52 de la roue polaire arrière 46S sont destinées à former des pôles magnétiques d'un deuxième signe, par exemple sud. Ainsi les griffes 52 imbriquées forment une alternance de pôle nord et de pôle sud.

Les roues polaires 46N, 46S ne sont pas en contact l'une avec l'autre. A cette fin, des espaces interpolaires 62 sont réservés entre les faces latérales 60 sensiblement parallèles en vis-à-vis de deux griffes 52 consécutives de la roue polaire avant 46N et de la roue polaire arrière 46S.Ainsi, deux faces latérales 60 associées en vis-à-vis sont espacées l'une de l'autre d'une largeur "Li" et elles délimitent l'espace interpolaire 62.

En se reportant à la figure 1, un bobinage d'excitation 64 est implanté axialement entre les plateaux 48 des roues polaires 46N, 46S. Il est porté par une partie de rotor 24 en forme d'un noyau 66 annulaire cylindrique coaxial à l'arbre central 26, qui comporte un alésage central. De manière non limitative, le noyau 66 est ici constitué de deux tronçons axialement distincts dont chacun est réalisé venu de matière avec une roue polaire 46N, 46S associée.

De manière connue, des éléments 68 formant barrière magnétique tels que des aimants permanents notamment en matériau ferromagnétique, sont agencés dans au moins deux espaces interpolaires 62 du rotor 24. Dans l'exemple représenté aux figures 3, 8, 11 et 13, et pour simplifier la compréhension de l'invention, le rotor 24 ne comporte que deux aimants 68 adjacents qui sont agencés dans deux espaces interpolaires 62 consécutifs associés du rotor 24, de part et d'autre d'une griffe déterminée 52D de la roue polaire arrière 46S.

Selon une variante non représentée, la totalité des espaces interpolaires 62 est équipée d'aimants 68.

Comme représenté aux figure 3, 5, 6 et 7, chaque aimant 68 est ici formé par une unique barre parallélépipédique d'axe principal longitudinal "L" parallèle aux faces latérales 60 associées de l'espace interpolaire 62 qui est entièrement constituée d'un matériau ferromagnétique. Tous les aimants 68 sont ici de forme et de dimensions identiques.

L'aimant 68 est plus particulièrement délimité transversalement par deux faces radiales polaires 70 nord et sud qui sont agencées en vis-à-vis de chacune des faces latérales 60 de l'espace interpolaire 62. Plus précisément, la face polaire 70 nord est agencée en vis-a-vis de la face latérale 60 de la griffe 52 de la roue polaire avant 46N nord, et la face polaire 70 sud est agencée en vis-à-vis de la face latérale 60 de la griffe 52 de la roue polaire arrière 46S sud.

L'aimant 68 est aussi délimité longitudinalement par deux faces d'extrémité longitudinale 72, et il est délimité radialement par une face intérieure 74 et par une face extérieure 76.

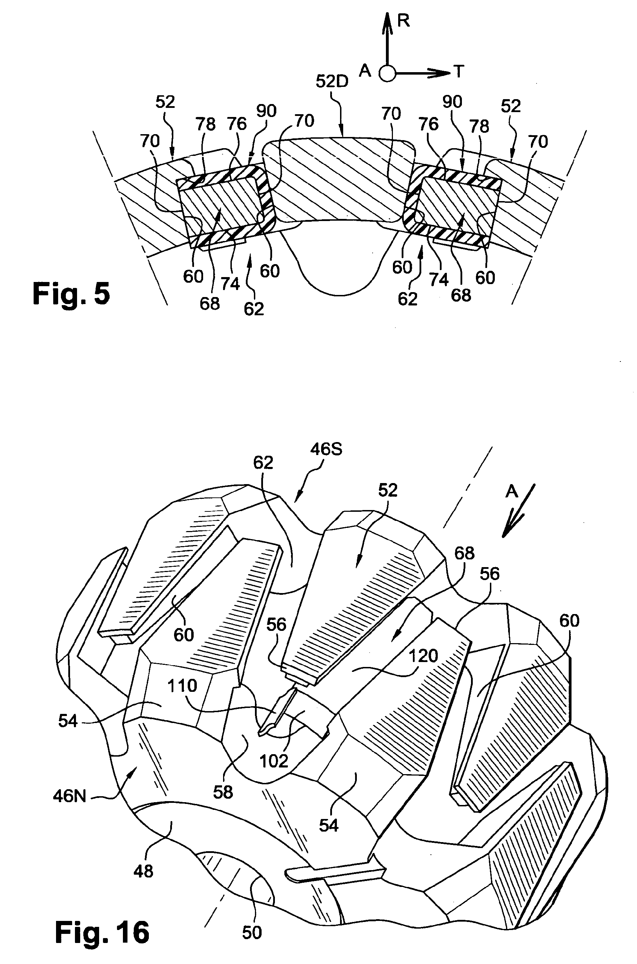

De manière connue et comme représenté à la figure 5, les aimants 68 sont agencés dans des gorges longitudinales qui sont formées dans les faces latérales 60 qui délimitent l'espace interpolaire 62. Un exemple de telles gorges et leur procédé de réalisation sont notamment décrits dans le document FR-A-2.793.085.

Le bord extérieur d'au moins une face latérale 60 de l'espace interpolaire 62 comporte plus particulièrement un rebord 78 qui s'étend circonférentiellement vers l'intérieur de l'espace interpolaire 62 de manière à retenir radialement l'aimant 68 à l'encontre de la force centrifuge lorsque le rotor 24 est en rotation rapide.

Lors de l'utilisation de l'alternateur, le bobinage d'excitation 64 du rotor 24 est alimenté en électricité de manière qu'un champ magnétique d'axe axial "B" soit induit. Ce champ magnétique de rotor est canalisé par les roues polaires 46N, 46S de manière à ressortir par les griffes 52.

La polarité des aimants 68 agencés dans les espaces interpolaires 62 est orientée de manière à empêcher le flux magnétique de "sauter" directement d'une roue polaire 46N, 34S à l'autre en passant par l'espace interpolaire 62. L'aimant 68 forme donc une barrière magnétique. Ainsi, le flux magnétique est déformé de manière à être redirigé vers les boucles du bobinage de stator 44.

Le rotor 24 est alors entraîné en rotation autour de son axe "B" et, selon un phénomène physique bien connu, le passage de chaque griffe 52 radialement au droit de chaque boucle des enroulements de phase du bobinage de stator 44 induit un courant électrique dans le bobinage de stator 44.

Le rotor 24 comporte une pluralité d'aimants 68 qui sont généralement montés symétriquement par rapport à l'axe "B" du rotor 24 pour éviter la formation d'un balourd lors de la rotation du rotor 24.

Les aimants 68 sont souvent agencés par paire, voire par trois ou plus, dans des espaces interpolaires 62 consécutifs. Plus particulièrement, au moins deux aimants 68 adjacents sont agencés dans deux espaces interpolaires 62 associés de part et d'autre de la griffe déterminée 52D. Comme représenté à la figure 3, la griffe déterminée 52D appartient ici à la roue polaire arrière 46S.

On a représenté aux figures 3 à 16 quatre modes de réalisation d'un agencement pour faciliter le montage des aimants 68 dans le rotor 24 de la machine électrique tournante 20.

Selon un premier mode de réalisation et comme illustré à la figure 3, les faces d'extrémité longitudinale 72 avant des deux aimants 68 adjacents sont reliées ensembles. Ainsi, les deux aimants 68 adjacents forment une chaîne ouverte 80.

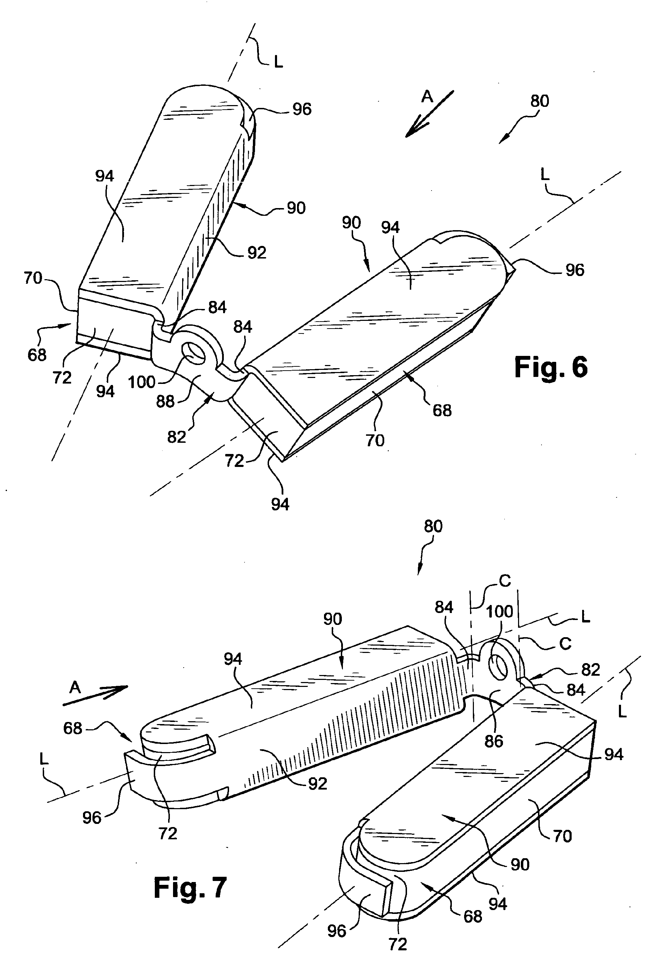

Comme représenté plus en détail aux figures 6 et 7, les faces d'extrémité longitudinale 72 avant des deux aimants 68 sont plus particulièrement reliées ensembles par l'intermédiaire d'une attache 82 qui présente la forme d'une plaque radiale circonférentielle qui comporte deux extrémités 84 circonférentielles. La chaîne ouverte 80 présente ainsi la forme d'un "V" dont les deux barres sont formées par les deux aimants 68 et qui est ouvert axialement vers l'arrière.

L'attache 82 comporte aussi une face interne 86 qui est destinée à être agencée contre l'extrémité libre 56 de la griffe déterminée 52D et une face externe 88 opposée qui est tournée vers l'échancrure 58 associée à la griffe déterminée 52D.

L'attache 82 est liée par chacune de ses deux extrémités 84 circonférentielles auxdites faces d'extrémité longitudinale 72 avant des aimants 68.

L'attache 82 est destinée à chevaucher axialement l'extrémité libre 56 avant de la griffe déterminée 52D, comme illustré à la figure 3.

En se reportant aux figures 6 et 7, chaque extrémité 84 de l'attache 82 est liée à l'aimant 68 associé par l'intermédiaire d'un support 90 qui est destiné à porter l'un des aimants 68.

Chaque support 90 forme un fourreau dans lequel l'aimant 68 associé est susceptible d'être fixé.

Avantageusement, le support 90 est conformé de manière qu'au moins l'une des faces radiales polaires 70 de l'aimant 68 soit directement en contact avec la face latérale 60 en vis-à-vis de l'espace interpolaire 62.

Le support 90 représenté aux figures 6 et 7 présente une section transversale en forme de "U" couché ouvert transversalement dans une direction opposée à la griffe déterminée 52D, comme illustré à la figure 5. Le support 90 comporte ici une âme 92 radiale qui s'étend axialement vers l'arrière depuis une extrémité 84 de l'attache 82. Deux ailes 94 extérieure et intérieure circonférentielles s'étendent circonférentiellement depuis les bords extérieur et intérieur de l'âme 92 dans une direction opposée à l'attache 82. Ainsi, l'aimant 68 est reçu entre les deux ailes 94 de manière que sa face radiale polaire 70 sud soit agencée en vis-à-vis de l'âme 92.

L'âme 92 est ainsi interposée entre la face radiale polaire 70 sud et la face latérale 60 associée de la griffe déterminée 52D, tandis que l'autre face radiale polaire 70 nord est agencée directement en vis-à-vis de l'autre face latérale 60 de l'espace interpolaire 62 associé.

L'aimant 68 est par exemple fixé dans le support 90 par pincement entre les deux ailes 94.

Le support 90 comporte aussi une languette 96 sensiblement transversale d'extrémité axiale, comme illustré à la figure 7, qui est agencée dans le prolongement de l'âme 92 à l'extrémité opposée à celle de l'attache 82 et qui est recourbée de manière à retenir longitudinalement vers l'arrière l'aimant 68.

Avantageusement, l'attache 82 est articulée de manière à former une charnière pivotante autour d'au moins un axe radial de manière que les aimants 68 adjacents soient pivotants l'un par rapport à l'autre.

Ainsi, la chaîne ouverte 80 d'aimants 68 est susceptible d'être adaptée sur différents modèles de roues polaires 46N, 46S présentant notamment des angles de griffe "α" différents d'un modèle à l'autre. Il n'est donc pas nécessaire de prévoir une chaîne ouverte 80 particulière pour chaque modèle de roue polaire 46N, 46S.

Plus particulièrement, l'attache 82 présente deux tronçons d'extrémités 84 flexibles dont chacun est courbé autour d'un axe radial "C". Chaque support 90 est ainsi pivotant par rapport à l'attache 82 autour d'un axe radial "C" associé qui est agencé sensiblement à l'extrémité 84 associée de l'attache 82. L'attache 82 comporte donc deux axes "C" parallèles de pivotement.

L'attache 82 représentée aux figures 3, 6 et 7 est réalisée en un matériau métallique. Ainsi, l'attache 82 est reliée de manière définitive aux aimants 68.

Chaque support 90 est avantageusement réalisé en un matériau métallique amagnétique formé venu de matière avec l'attache 82. Les supports 90 et l'attache 82 sont par exemple réalisés par découpage puis pliage d'une feuille de tôle. La feuille de tôle présente par exemple une épaisseur de 0,5 mm.

Les extrémités 84 de l'attache 82 sont conçues de manière à être déformables élastiquement ou plastiquement pour leur conférer la flexibilité souhaitée.

Avantageusement, comme représenté à la figure 3, l'attache 82 comporte des moyens de positionnement sur la griffe déterminée 52D qui sont destinés à coopérer par emboîtement de formes complémentaires avec de moyens de positionnement associés de l'extrémité libre 56 de la griffe déterminée 52D.

Plus particulièrement, l'extrémité libre 56 de la griffe déterminée 52D comporte un pion 98 axial de positionnement qui est destiné à être emboîté axialement dans un jour 100 de forme complémentaire de l'attache 82. Ainsi, le montage de la chaîne ouverte 80 d'aimants 68 est simplifié.

De plus, ces moyens de positionnement sont aussi susceptibles de former des moyens de fixation provisoire de la chaîne ouverte 80 d'aimants 68 sur la griffe déterminée 52D avant que la roue polaire arrière 46S et la roue polaire avant 46N ne soient imbriquées l'une dans l'autre.

Cet agencement permet un montage plus rapide et plus simple des aimants 68 sur le rotor 24.

De plus, cet agencement est léger et peu encombrant car la retenue des aimants 68 à l'encontre de la force centrifuge est assurée par les rebords 78 formés dans les griffes 52 elles-mêmes. L'attache 82 peut donc être réalisée avec peu de matière sans remplir les conditions de résistance à la force centrifuge.

Un même rotor 24 peut bien sûr être équipé de plusieurs chaînes ouvertes indépendantes.

On décrit à présent le procédé de montage d'un tel rotor 24 de la machine électrique tournante 20. Chaque aimant 68 est préalablement fixé dans son support 90 associé. Au début du procédé d'assemblage, les roues polaires 46N, 46S ne sont pas assemblées.

Avantageusement, les aimants 68 sont aimantés à la fin du procédé de montage. Ainsi, les aimants 68 ne risquent pas de casser l'attache 82 en s'attirant ou en se repoussant mutuellement.

De plus, il est ainsi possible d'effectuer des opérations d'usinage sur le rotor 24 sans que les aimants 68 n'attirent des copeaux ou de la limaille de fer.

Lors d'une première étape d'assemblage "E1" de la chaîne ouverte 80 d'aimants 68 sur le rotor 24, la chaîne ouverte 80 d'aimants 68 est saisie, par exemple par un dispositif de préhension (non représenté), puis elle est agencée sur la roue polaire arrière 46S portant la griffe déterminée 52D.

Lors de cette première étape "E1 ", la chaîne ouverte 80 est agencée axialement en avant de la griffe déterminée 52D, l'attache 82 étant en vis-à-vis de l'extrémité libre 56. Puis l'assemblage est réalisé selon un mouvement de translation vers l'arrière en faisant pénétrer le pion de positionnement 98 dans le jour 100 de l'attache 82.

Les moyens de positionnement 72, 74 permettent avantageusement de fixer temporairement la chaîne ouverte 80 sur la griffe déterminée 52D.

Puis la roue polaire avant 46N est imbriquée dans la roue polaire arrière 46S comme représenté à la figure 3. Les aimants 68 se retrouvent alors enserrés de manière inamovible entre les deux faces latérales 60 de l'espace interpolaire 62 associé.

L'arbre central 26 est emmanché dans les roues polaires 46N, 46S soit pendant, soit après l'étape d'assemblage "E1" de la chaîne ouverte 80 sur la griffe déterminée 52D.

Ensuite, lors d'une deuxième étape d'aimantation "E2" des aimants 68, les aimants 68 sont aimantés. Cette étape d'aimantation "E2" des aimants 68 après leur montage sur le rotor 24 permet d'éviter toute erreur d'orientation des pôles magnétiques de chaque aimant 68.

Selon une variante du procédé de montage de la chaîne ouverte 80 d'aimants 68 sur le rotor 24, la deuxième étape d'aimantation "E2" est réalisée avant la première étape de montage "E1". Dans ce cas, il faut veiller à ce que les faces en vis-à-vis des aimants 68 adjacents forment des pôles de même type qui se repoussent mutuellement pour éviter que deux aimants 68 se retrouvent collés l'un à l'autre en risquant de casser l'attache 82.

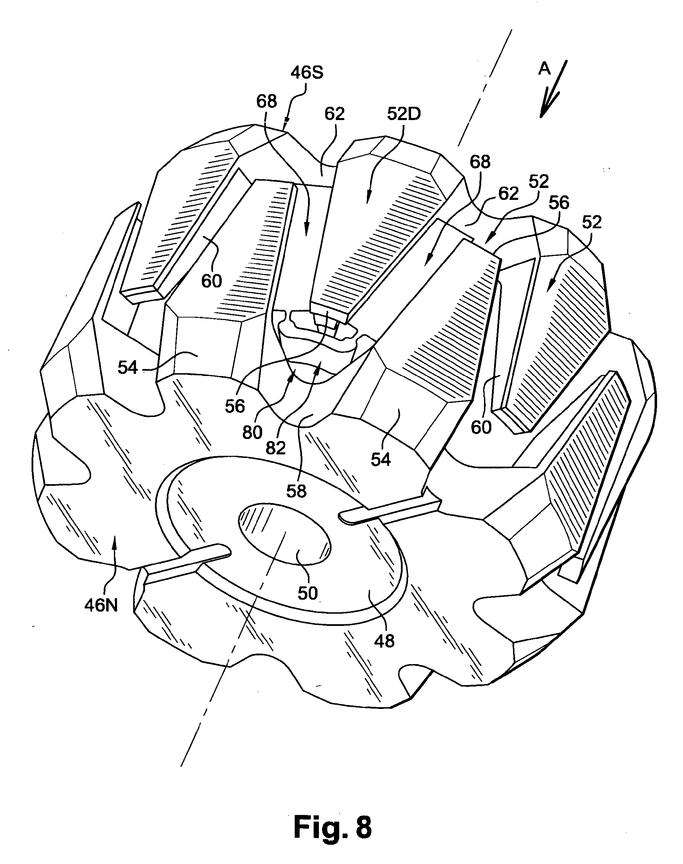

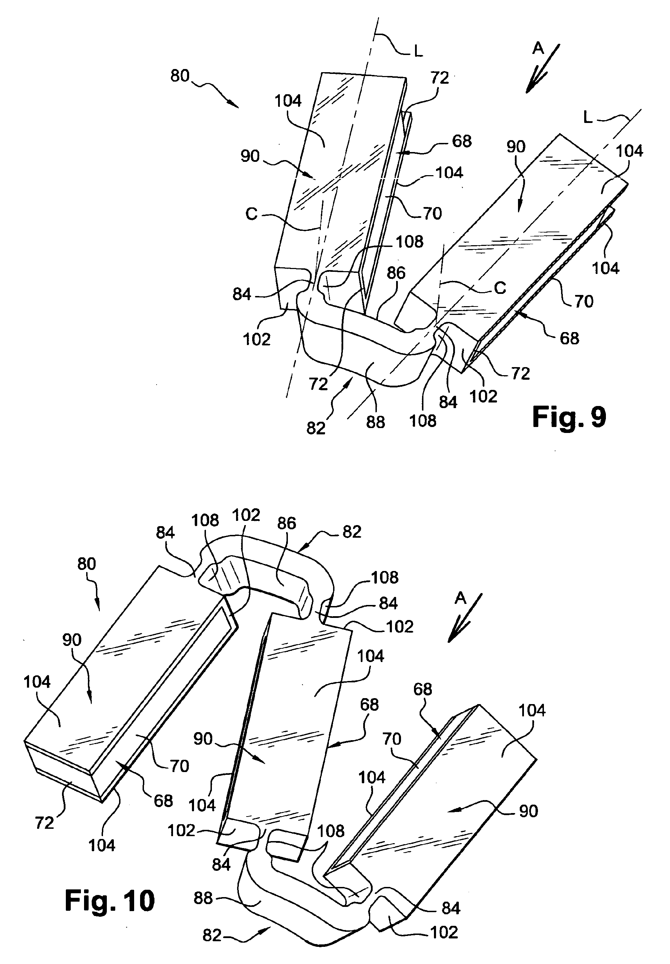

On a représenté aux figures 8 et 9, un deuxième mode de réalisation de la chaîne ouverte 80. d'aimants 68 dans lequel l'attache 82 est réalisée en un matériau plastique.

Les supports 90 sont réalisés en matériau plastique venus de matière avec l'attache 82.

Chaque support 90 est plus particulièrement surmoulé autour de l'aimant 68 associé. Chaque aimant 68 est ainsi fixé au support 90.

La réalisation des supports 90 par surmoulage permet de laisser nues les deux faces radiales polaires 70 de chaque aimant 68 de manière chaque face radiale polaire 70 soit directement en vis-à-vis de la face latérale 60 associée de l'espace interpolaire 62.

Chaque support 90 présente une section longitudinale en forme de "U" couché ouvert vers l'arrière. Chaque support 90 comporte une âme 102 transversale qui est agencée contre la face d'extrémité longitudinale 72 avant de l'aimant 68 et deux ailes 104 longitudinales transversales intérieure et extérieure qui s'étendent longitudinalement depuis des bords intérieur et extérieur de manière à couvrir les faces intérieure 74 et extérieure 76 de l'aimant 68.

Les extrémités 84 circonférentielles de l'attache 82 sont reliées au centre 106 de l'âme 102 de chaque support 90.

L'aile extérieure 104 est ainsi interposée entre le rebord 78 des faces latérales 60 et l'aimant 68 de manière à former une cale qui est notamment susceptible de rattraper les jeux radiaux.

Chaque support 90 est articulé élastiquement et/ou plastiquement autour d'un axe de pivotement "C" radial par rapport à l'attache 82.

L'articulation de l'attache 82 par rapport aux supports 90 est alors réalisée par deux tronçons flexibles formés de films 108 de matériau plastique qui sont venus de matière avec l'attache 82 et avec les supports 90. Chaque film 108 forme ainsi l'extrémité 84 de liaison de l'attache 82 avec chacun des deux supports 90 associés.

Dans l'exemple de ce deuxième mode de réalisation représenté aux figures 8 et 9, l'attache 82 ne comporte pas de moyens de positionnement sur la griffe déterminée 52D. Cependant, on comprendra que l'attache 82 peut être équipée de moyens de positionnement similaires à ceux décrits dans le premier mode de réalisation.

On comprendra bien sûr que l'invention n'est pas limitée à des chaînes ouvertes 80 de deux aimants 68 mais qu'elle est aussi applicable à des chaînes ouvertes 80 comportant un nombre plus important d'aimants 68.

Ainsi, on a représenté à la figure 10 une variante du deuxième mode de réalisation de la chaîne ouverte 80 d'aimants 68 qui comporte un troisième aimant 68 qui est représenté à gauche à la figure 10.

Le troisième aimant 68 et l'aimant central 68 sont destinés à être agencés dans deux espaces interpolaires 62 associés qui sont agencés de part et d'autre d'une griffe 52 de la roue polaire avant 46N.

La face d'extrémité longitudinale 72 arrière du troisième aimant 68 est reliée à la face d'extrémité longitudinale 72 arrière de l'aimant 68 central par l'intermédiaire d'une attache 82 de manière similaire à ce qui est décrit dans le deuxième mode de réalisation.

Ainsi, le troisième aimant 68 est aussi porté par un support 90 similaire à celui décrit dans le deuxième mode de réalisation. L'attache 82 chevauche axialement l'extrémité libre 56 arrière de ladite griffe 52 de la roue polaire avant 46N.

Les faces d'extrémité longitudinale 72 arrière et avant de l'aimant 68 central sont ainsi reliées respectivement au premier et au troisième aimants 68 par l'intermédiaire de deux attaches 82 articulées similaires à celle décrite précédemment.

Le support 90 central comporte ainsi deux âmes 102 qui sont agencées à chacune des faces d'extrémité longitudinale 72 de l'aimant 68. La section longitudinale du support 90 central présente un contour rectangulaire fermé.

Ainsi, il est possible d'agencer en une seule opération trois aimants 68 sur le rotor 24.

Selon un troisième mode de réalisation non représenté de la chaîne ouverte 80 d'aimants 68, l'attache 82 est réalisée en un matériau thermiquement fusible, tel que de la cire ou de la résine, de manière à relier les aimants 68 de façon temporaire.

L'attache 82 peut alors est reliée directement et sans supports 90 aux faces d'extrémité longitudinale 72 avant des aimants 68 par adhérence avec le matériau fusible.

L'attache 82 est par exemple destinée à fondre lors de la première utilisation de la machine électrique tournante 20. A cet effet, le matériau fusible est sélectionné de manière à fondre à une température inférieure ou égale à la température de fonctionnement du rotor 24 lors de l'utilisation normale de la machine électrique tournante 20.

Un autre problème connu des machines électriques tournantes 20 est que, lorsque le rotor 24 tourne à très haute vitesse, il se produit un échauffement à l'intérieur du carter 22.

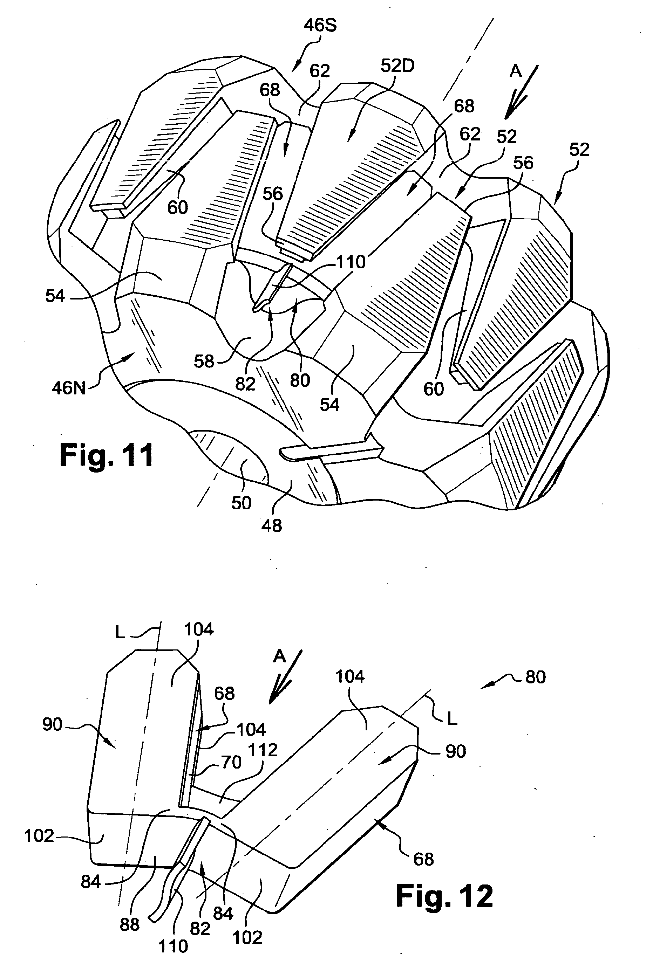

Pour résoudre ce problème l'invention propose un rotor similaire à celui décrit dans les deux premiers modes de réalisation et dans lequel l'attache 82 comporte un élément de ventilation, et plus particulièrement une pale 110 sensiblement radiale qui s'étend axialement depuis la face externe 88 de l'attache 82 à travers l'échancrure 58 associée de manière à former une pale 110 de ventilation lors de la rotation du rotor 24, comme représenté aux figures 11 et 12.

Afin d'améliorer la résistance de l'ensemble formé par les supports 90 et l'attache 82 , l'attache 82 est reliée aux ailes 104 intérieures des supports 90 par une nervure 112 circonférentielle axiale qui est destinée à être agencée sous la griffe déterminée 52D. Cette nervure 112 a pour fonction de renforcer la rigidité de la pièce formée par l'attache 82 et les supports 90 afin d'éviter que les efforts exercés par la pale 110 sur l'attache 82 lors de la rotation du rotor 24 ne provoque une cassure ou une déformation de l'attache 82. Les efforts exercés par la pale 110 sont principalement circonférentiels. Ainsi, il n'est pas nécessaire que la nervure 112 soit agencée au contact de la face intérieure de la griffe déterminée 52D, ni que la nervure 112 soit aussi épaisse qu'une nervure destinée retenir les aimants 68 à l'encontre de la force centrifuge.

La pale 110 est conformée de manière à brasser l'air pour permettre un refroidissement optimal de la machine électrique tournante 20.

Dans cette variante, les supports 90 ne sont pas montés pivotants par rapport à l'attache 82.

Les supports 90, l'attache 82, la nervure 112 et la pale 110 sont réalisés en une seule pièce venue de matière en matériau plastique, par exemple par moulage.

Par ailleurs, on a aussi constaté que lors de la rotation à très haute vitesse du rotor 24, il se produit des vibrations qui sont entre autre provoquées par le passage régulier des échancrures 58 au droit de certains points de résonance du stator 28. Ce passage régulier des échancrures 58 provoque des vibrations d'air qui entrent en résonance en produisant des bruits désagréables.

Pour briser les harmoniques de ces vibrations résonantes et éviter ainsi que les vibrations n'entrent en résonance, l'invention propose aussi de remplacer la pale 110 par un embout 114. L'embout 114 forme un élément de réduction du bruit lors du fonctionnement de la machine électrique tournante 20. En effet, les échancrures 58 ouvertes ne sont plus réparties de manière régulière autour du rotor 24 et elles ne passent donc plus de manière régulière au droit des points de résonance.

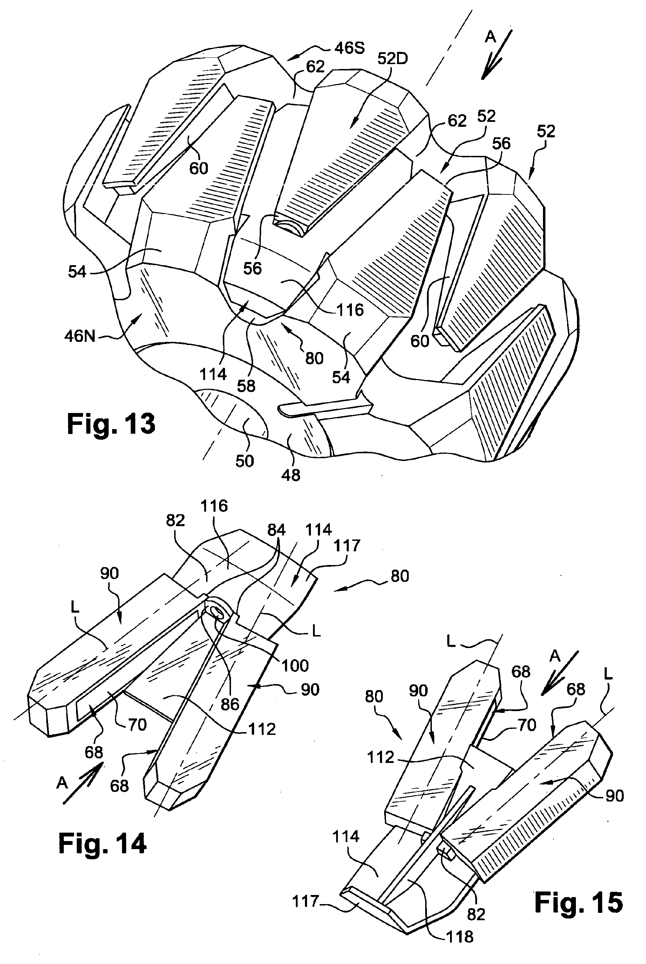

Comme représenté aux figures 13, 14 et 15, l'attache 82 porte l'embout 114 qui est destiné à obturer l'échancrure 58 associée de la roue polaire avant 46N. Plus particulièrement, l'embout 114 est formé par un couvercle dont une face extérieure 116 est conformée en forme d'arc de cylindre afin d'être agencée dans la continuité des faces extérieures des griffes 52 adjacentes à ladite échancrure 58.

Une patte s'étend de manière sensiblement radiale vers l'intérieur depuis un bord d'extrémité avant de la surface extérieure 116 de l'embout 114 de manière à clore axialement vers l'avant l'échancrure 58. Ainsi, l'échancrure 58 n'influence plus du tout l'écoulement de l'air autour du rotor 24.

Pour éviter que l'embout 114 lui-même ne vibre contre la roue polaire avant 46N, il est avantageux de renforcer sa rigidité. A cet effet, une première nervure 112 circonférentielle sensiblement axiale similaire à celle décrite précédemment relie l'attache 82 à chacune des ailes 104 intérieures des supports 90. La nervure 112 est ici agencée dans le prolongement de la face extérieure 116 de l'embout 114.

Pour rigidifier la structure de l'embout 114, une deuxième nervure 118 radiale est agencée de manière à relier la face intérieure de l'embout 114 et la face intérieure de la première nervure 112. La deuxième nervure 118 passe ainsi entre les deux supports 90.

Les supports 90, l'attache 82, les nervures 112, 118 et l'embout 114 sont réalisés en une seule pièce venue de matière en matériau plastique, par exemple par moulage.

On a représenté à la figure 16 un agencement pour le montage d'un aimant 68 unique dans un espace interpolaire 62 du rotor 12 de la machine électrique tournante 10.

Plus particulièrement, l'aimant 68 est agencé dans un support individuel 120 associé.

Le rotor 24 est susceptible d'être équipé d'une pluralité d'aimants 68 uniques qui sont portés chacun par un support 120 associé, les supports individuels 120 n'étant pas reliés entre eux.

Chaque support individuel 120 porte un élément qui est destiné à remplir une fonction particulière, comme cela est décrit en détail par la suite, par exemple un élément de ventilation ou un élément de réduction du bruit.

Chaque support 120 forme un fourreau dans lequel l'aimant 68 associé est susceptible d'être fixé.

Avantageusement, le support individuel 120 est conformé de manière qu'au moins l'une des faces radiales polaires 70 de l'aimant 68 est directement en contact avec la face latérale 60 en vis-à-vis de l'espace interpolaire 62.

Le support individuel 120 est ici réalisé en un matériau plastique par moulage.

Le support individuel 120 est plus particulièrement surmoulé autour de l'aimant 68 associé. Chaque aimant 68 est ainsi fixé au support individuel 120.

La réalisation du support individuel 120 par surmoulage permet de laisser nues les deux faces radiales polaires 70 de l'aimant 68 de manière que chaque face radiale polaire 70 soit agencée directement en vis-à-vis de chaque face latérale 60 associée de l'espace interpolaire 47.

Le support individuel 120 présente une section longitudinale en forme de "U" couché ouvert vers l'arrière. Le support individuel 120 comporte une âme transversale 102 qui est agencée contre une face d'extrémité longitudinale 72 avant de l'aimant 68 et deux ailes 104 intérieure et extérieure qui s'étendent longitudinalement depuis des bords intérieur et extérieur de manière à couvrir les faces intérieure 74 et extérieure 76 de l'aimant 68.

L'aile extérieure 104 est ainsi. interposée entre le rebord 78 des faces latérales 60 et l'aimant 68 de manière à former une cale qui est notamment susceptible de rattraper les jeux radiaux.

Un problème connu des machines électriques tournantes 20 est que, lorsque le rotor 24 tourne à très haute vitesse, il se produit un échauffement à l'intérieur du carter 22.

Pour résoudre ce problème l'invention propose un d'agencer un élément de ventilation et plus particulièrement une pale 110 sensiblement radiale qui s'étend axialement depuis l'âme 102 du support individuel 120 à travers l'échancrure 58 associée de manière à former une pale 110 de ventilation lors de la rotation du rotor 24 comme représenté à la figure 16.

La pale 110 est conformée de manière à brasser l'air pour permettre un refroidissement optimal de la machine électrique tournante 20.

Le support individuel 120 et la pale 110 sont réalisés en une seule pièce venue de matière en matériau plastique, par exemple par moulage..

La pale 110 se raccorde sur un côté du support 10 ou, dans un variante non représentée, sur le milieu de celui-ci dans l'axe de l'aimant 68.

Selon une variante non représentée, le support individuel 120 comporte deux âmes 102 qui sont agencées à chacune des extrémités longitudinales 72 de l'aimant 68. La section longitudinale du support individuel 120 présente ainsi un contour rectangulaire fermé.

Une deuxième pale est agencée sur l'âme opposée. Ainsi, le rotor 24 comporte deux ventilateurs qui ont pour fonction de brasser l'air de part et d'autre du rotor 24.

Par ailleurs, on a aussi constaté que lors de la rotation à très haute vitesse du rotor 24, il se produit des vibrations qui sont entre autre provoquées par le passage régulier des échancrures 58 au droit de certains points de résonance du stator 28. Ce passage régulier des échancrures 58 provoque des vibrations d'air qui entrent en résonance en produisant des bruits désagréables.

Pour briser les harmoniques de ces vibrations résonantes et éviter ainsi que les vibrations n'entrent en résonance, l'invention propose aussi de remplacer la pale 110 par un embout 114. L'embout 114 forme un élément de réduction du bruit lors du fonctionnement de la machine électrique tournante 20. En effet, les échancrures 58 ouvertes ne sont plus réparties de manière régulière autour du rotor 24 et elles ne passent donc plus de manière régulière au droit des points de résonance.

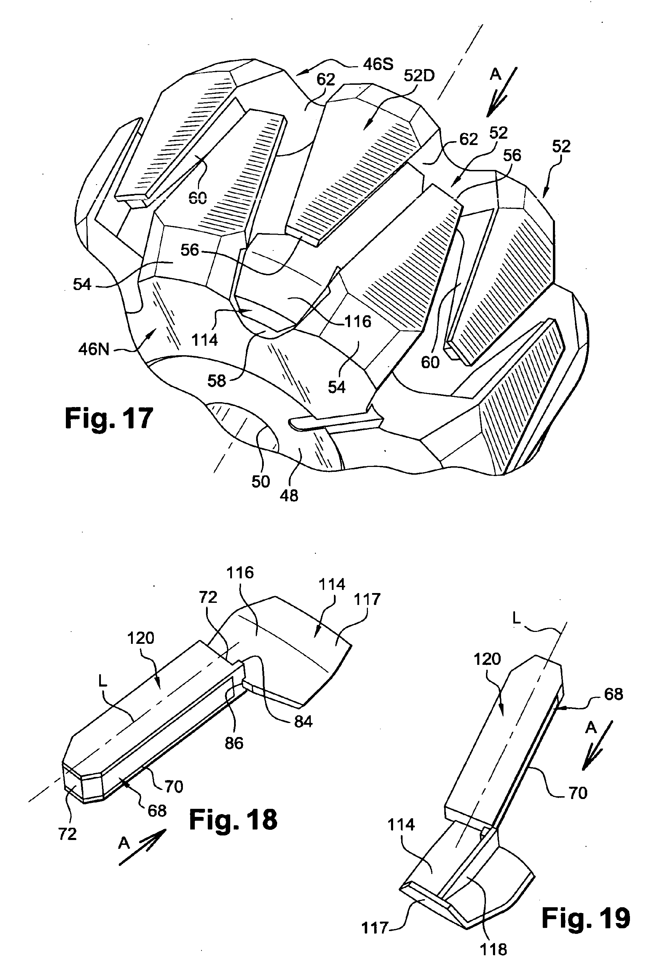

Ainsi, selon une variante de l'invention qui est représentée aux figures 17, 18 et 19, l'âme 102 porte l'embout 114 qui est destiné à obturer l'échancrure 41 associée. Plus particulièrement, l'embout 114 comporte une coque dont une face extérieure 116 est conformée en forme d'arc de cylindre afin d'être agencée dans la continuité des faces extérieures des griffes adjacentes à ladite échancrure 58.

Pour éviter que l'embout 114 lui-même ne vibre contre la roue polaire, il est avantageux de renforcer sa rigidité. A cet effet, une nervure radiale 118 est agencée de manière à relier la face intérieure de l'embout 114 et l'âme du support individuel 120.

Le support individuel 120, la nervure 118 et l'embout 114 sont réalisés en une seule pièce venue de matière en matériau plastique par exemple par moulage.

Selon une variante non représentée, le support individuel 120 comporte deux âmes qui sont agencées à chacune des extrémités longitudinales 72 de l'aimant 68. La section longitudinale du support individuel 120 présente ainsi un contour rectangulaire fermé.

Un deuxième embout de réduction du bruit est agencé sur l'âme opposée. Ainsi, le rotor comporte deux ventilateurs qui ont pour fonction de brasser l'air de part et d'autre du rotor.

Selon encore une autre variante, le support individuel 120 comporte deux âmes d'extrémité longitudinale dont l'une porte une pale et l'autre porte un embout de réduction du bruit.

Cet agencement pour le montage d'un aimant unique permet d'équiper simultanément le rotor 24 avec un aimant 68 et une autre fonction telle qu'une fonction de ventilation ou des embouts de réduction du bruit, en une seule opération de montage.

## Revendications

1. Rotor (24) de machine électrique tournante (20), notamment pour véhicule automobile, qui est destiné à être monté rotatif autour d'un axe de rotation (B) d'orientation axiale, et qui comporte :
- une roue polaire avant (46N) et une roue polaire arrière (46S) qui sont montées centrées sur l'axe de rotation (B) ;
- des griffes (52) qui s'étendent axialement en direction de l'autre roue polaire (46N, 46S) depuis une base (54) agencée à la périphérie de chaque roue polaire (46N, 46S) jusqu'à une extrémité libre (56), chaque griffe (52) d'une roue polaire (46N, 46S) étant imbriquée circonférentiellement entre deux griffes (52) périphériques axiales adjacentes de l'autre roue polaire (46N, 46S), chaque griffe (52) étant délimitée circonférentiellement par deux face latérales (60) ;
- au moins deux espaces interpolaires (62) qui sont réservés entre les faces latérales (60) en vis-à-vis de deux griffes (52) consécutives de chaque roue polaire (46N, 46S) ;
- au moins deux éléments (68) formant barrière magnétique qui sont agencés dans deux espaces interpolaires (62) associés de part et d'autre d'une griffe déterminée (52D) de la roue polaire arrière (46S) ;
**caractérisé en ce que** les extrémités longitudinales (72) avant desdits deux éléments (68) formant barrière magnétique sont reliées ensembles notamment de manière à former une chaîne ouverte (80), par l'intermédiaire d'une attache (82) qui est liée par chacune de deux extrémités (84) auxdites extrémités longitudinales (72) avant des éléments (68) formant barrière magnétique et qui est destinée à chevaucher axialement l'extrémité libre (56) de la griffe déterminée (52D).

2. Rotor (24) selon la revendication précédente, **caractérisé en ce que** l'attache (82) est articulée de manière à former une charnière pivotante autour d'au moins un axe radial (C) de manière que les éléments (68) formant barrière magnétique soient pivotants l'un par rapport à l'autre.

3. Rotor (24) selon l'une quelconque des revendications précédentes, **caractérisé en ce que** l'attache (82) est réalisée en un matériau thermiquement fusible de manière à relier de façon temporaire les éléments (68) formant barrière magnétique.

4. Rotor (24) selon l'une quelconque des revendications 1 à 2, **caractérisé en ce que** l'attache (82) est reliée de manière définitive aux éléments (68) formant barrière magnétique.

5. Rotor (24) selon la revendication précédente, **caractérisé en ce que** l'attache (82) est réalisée en un matériau plastique.

6. Rotor (24) selon la revendication précédente, **caractérisé en ce que** les supports (90) sont réalisés en matériau plastique venus de matière avec l'attache (82).

7. Rotor (24) selon la revendication précédente, **caractérisé en ce que** chaque support (90) est surmoulé autour de l'élément (68) formant barrière magnétique associé.

8. Rotor (24) selon la revendication 4, **caractérisé en ce que** l'attache (82) est réalisée en un matériau métallique amagnétique.

9. Rotor (24) selon la revendication précédente, **caractérisé en ce que** chaque support (90) est réalisé en un matériau métallique amagnétique formé venu de matière avec l'attache (82).

10. Rotor (24) selon l'une quelconque des revendications précédentes, **caractérisé en ce que** l'attache (82) comporte des moyens de positionnement (100) sur la griffe déterminée (52D) qui sont destinés à coopérer par emboîtement de forme complémentaires avec des moyens de positionnement (98) associés de l'extrémité libre (56) de la griffe déterminée (52D).

11. Rotor (24) selon l'une quelconque des revendications précédentes, **caractérisé en ce que** la chaîne ouverte (80) d'éléments (68) formant barrière magnétique comporte au moins un troisième élément (68) formant barrière magnétique.

12. Rotor (24) selon l'une quelconque des revendications précédentes, **caractérisé en ce que** le bord extérieur d'au moins une face latérale (60) de chaque espace interpolaire (62) comporte un rebord (78) qui s'étend circonférentiellement vers l'intérieur de l'espace interpolaire (62) de manière à retenir radialement l'élément (68) formant barrière magnétique associé à l'encontre de la force centrifuge lorsque le rotor (24) est en rotation.

13. Rotor (24) selon l'une quelconque des revendications précédentes, **caractérisé en ce que** l'élément (68) formant barrière magnétique est un aimant permanent, notamment en matériau ferromagnétique.

14. Rotor selon l'une quelconque des revendications précédentes, **caractérisé en ce que** l'un au moins des aimants dans un espace interpolaire est formé par plusieurs pièces.

15. Procédé de montage du rotor (24) de machine électrique tournante (20) selon la revendication 13 prise en combinaison avec l'une quelconque des revendications 1 à 12,
**caractérisé en ce qu'**il comporte une première étape d'assemblage (E1) de la chaîne ouverte (80) d'aimants (68) sur le rotor (24) et une deuxième étape d'aimantation (E2) des aimants (68).

16. Procédé selon la revendication 15, **caractérisé en ce que** la deuxième étape d'aimantation (E2) est réalisée avant la première étape de montage (E1), de manière que les faces radiales polaires (70) en vis-à-vis des aimants (68) de la chaîne ouverte (80) forment des pôles de même type qui se repoussent mutuellement.

## Claims

1. Rotor (24) for a rotary electric machine (20), in particular for a motor vehicle, which is intended to be fitted in a manner such that it rotates about an axis of rotation (B) of axial orientation, and which comprises:
- a front polar wheel (46N) and a rear polar wheel (46S) which are fitted centred on the axis of rotation (B);
- claws (52) which extend axially towards the other polar wheel (46N, 46S), from a base (54) arranged at the periphery of each polar wheel (46N, 46S), as far as a free end (56), each claw (52) of a polar wheel (46N, 46S) being circumferentially interleaved between two adjacent axial peripheral claws (52) of the other polar wheel (46N, 46S), each claw (52) being circumferentially delimited by two lateral faces (60);
- at least two inter-polar spaces (62) which are maintained between the opposite lateral faces (60) of two consecutive claws (52) of each polar wheel (46N, 46S);
- at least two members (68) forming a magnetic barrier which are arranged in two associated inter-polar spaces (62) on either side of a specific claw (52D) of the rear polar wheel (46S);
**characterized in that** the front longitudinal ends (72) of the said two members (68) forming a magnetic barrier are connected together, in particular in such a way as to form an open chain (80), by the intermediary of a tie (82) which is connected by each of two ends (84) to the said front longitudinal ends (72) of the members (68) forming a magnetic barrier and which is intended to straddle axially the free end (56) of the specific claw (52D).

2. Rotor (24) according to the preceding claim, **characterized in that** the tie (82) is articulated so as to form a hinge pivoting about at least one radial axis (C) such that the members (68) forming a magnetic barrier are pivoting with respect to each other.

3. Rotor (24) according to any one of the preceding claims, **characterized in that** the tie (82) is made from a material that is thermally fusible so as to temporarily connect the members (68) forming a magnetic barrier.

4. Rotor (24) according to any one of Claims 1 to 2, **characterized in that** the tie (82) is definitively connected to the members (68) forming a magnetic barrier.

5. Rotor (24) according to the preceding claim, **characterized in that** the tie (82) is made of plastic.

6. Rotor (24) according to the preceding claim, **characterized in that** the supports (90) are made from plastic in one piece with the tie (82).

7. Rotor (24) according to the preceding claim, **characterized in that** each support (90) is overmoulded around the associated member (68) forming a magnetic barrier.

8. Rotor (24) according to Claim 4, **characterized in that** the tie (82) is made from a non-magnetic metal.

9. Rotor (24) according to the preceding claim, **characterized in that** each support (90) is made from a non-magnetic metal and formed in one piece with the tie (82) .

10. Rotor (24) according to any one of the preceding claims, **characterized in that** the tie (82) comprises means (100) of positioning on the specific claw (52D) which are intended to cooperate by the complementary shape interlocking with associated positioning means (98) of the free end (56) of the specific claw (52D).

11. Rotor (24) according to any one of the preceding claims, **characterized in that** the open chain (80) of members (68) forming a magnetic barrier comprises at least a third member (68) forming a magnetic barrier.

12. Rotor (24) according to any one of the preceding claims, **characterized in that** the outer edge of at least one lateral face (60) of each inter-polar space (62) comprises a rim (78) which extends circumferentially towards the inside of the inter-polar space (62) in such a way as to retain radially the associated member (68) forming a magnetic barrier against the action of centrifugal force when the rotor (24) is rotating.

13. Rotor (24) according to any one of the preceding claims, **characterized in that** the member (68) forming a magnetic barrier is a permanent magnet, in particular made of a ferromagnetic material.

14. Rotor according to any one of the preceding claims, **characterized in that** at least one of the magnets in an inter-polar space is formed by several parts.

15. Method of assembling the rotor (24) of a rotating electric machine (20) according to Claim 13, taken in combination with any one of Claims 1 to 12,
**characterized in that** it comprises a first step of assembly (E1) of the open chain (80) of magnets (68) on the rotor (24) and a second step of magnetization (E2) of the magnets (68).

16. Method according to Claim 15, **characterized in that** the second step of magnetization (E2) is carried out before the first assembly step (E1), in such a way that the facing radial polar faces (70) of the magnets (68) of the open chain (80) form poles of the same type which mutually repel each other.

## Patentansprüche

1. Rotor (24) einer drehenden elektrischen Maschine (20), insbesondere für ein Kraftfahrzeug, der dazu bestimmt ist, um eine Drehachse (B) axialer Ausrichtung drehend montiert zu werden, und der aufweist:
- ein vorderes Polrad (46N) und ein hinteres Polrad (46S), die auf die Drehachse (B) zentriert montiert sind;
- Klauen (52), die sich axial in Richtung des anderen Polrads (46N, 46S) ausgehend von einer am Umfang jedes Polrads (46N, 46S) angeordneten Basis (54) bis zu einem freien Ende (56) erstrecken, wobei jede Klaue (52) eines Polrads (46N, 46S) in Umfangsrichtung zwischen zwei axiale benachbarte Umfangsklauen (52) des anderen Polrads (46N, 46S) eingeschoben ist, wobei jede Klaue (52) in Umfangsrichtung von zwei Seitenflächen (60) begrenzt wird;
- mindestens zwei Polzwischenräume (62), die zwischen den einander gegenüberliegenden Seitenflächen (60) von zwei aufeinanderfolgenden Klauen (52) jedes Polrads (46N, 46S) ausgespart sind;
- mindestens zwei eine Magnetschranke bildende Elemente (68), die in zwei zugeordneten Polzwischenräumen (62) zu beiden Seiten einer bestimmten Klaue (52D) des hinteren Polrads (46S) angeordnet sind;
**dadurch gekennzeichnet, dass** die vorderen Längsenden (72) der zwei eine Magnetschranke bildenden Elemente (68) miteinander insbesondere so verbunden sind, dass sie eine offene Kette (80) formen, mittels einer Halterung (82), die durch jedes von zwei Enden (84) mit den vorderen Längsenden (72) der eine Magnetschranke formenden Elemente (68) verbunden und dazu bestimmt ist, axial auf dem freien Ende (56) der bestimmten Klaue (52D) zu sitzen.

2. Rotor (24) nach dem vorhergehenden Anspruch, **dadurch gekennzeichnet, dass** die Halterung (82) so angelenkt ist, dass sie ein um mindestens eine radiale Achse (C) schwenkendes Scharnier bildet, damit die eine Magnetschranke bildenden Elemente (68) zueinander schwenkbar sind.

3. Rotor (24) nach einem der vorhergehenden Ansprüche, **dadurch gekennzeichnet, dass** die Halterung (82) aus einem wärmeschmelzbaren Material hergestellt ist, um die eine Magnetschranke formenden Elemente (68) vorübergehend zu verbinden.

4. Rotor (24) nach einem der Ansprüche 1 bis 2, **dadurch gekennzeichnet, dass** die Halterung (82) endgültig mit den eine Magnetschranke formenden Elementen (68) verbunden ist.

5. Rotor (24) nach dem vorhergehenden Anspruch, **dadurch gekennzeichnet, dass** die Halterung (82) aus einem Kunststoff hergestellt ist.

6. Rotor (24) nach dem vorhergehenden Anspruch, **dadurch gekennzeichnet, dass** die Träger (90) aus Kunststoff in einem Stück mit der Halterung (82) hergestellt sind.

7. Rotor (24) nach dem vorhergehenden Anspruch, **dadurch gekennzeichnet, dass** jeder Träger (90) um das zugeordnete eine Magnetschranke formende Element (68) aufgeformt ist.

8. Rotor (24) nach Anspruch 4, **dadurch gekennzeichnet, dass** die Halterung (82) aus einem unmagnetischen metallischen Material hergestellt ist.

9. Rotor (24) nach dem vorhergehenden Anspruch, **dadurch gekennzeichnet, dass** jeder Träger (90) aus einem unmagnetischen metallischen Material hergestellt, das aus einem Stück mit der Halterung (82) geformt wird.

10. Rotor (24) nach einem der vorhergehenden Ansprüche, **dadurch gekennzeichnet, dass** die Halterung (82) Positioniereinrichtungen (100) auf der bestimmten Klaue (52D) aufweist, die dazu bestimmt sind, durch Ineinanderfügen komplementärer Formen mit zugeordneten Positioniereinrichtungen (98) des freien Endes (56) der bestimmten Klaue (52D) zusammenzuwirken.

11. Rotor (24) nach einem der vorhergehenden Ansprüche, **dadurch gekennzeichnet, dass** die offene Kette (80) von eine Magnetschranke formenden Elementen (68) mindestens ein drittes eine Magnetschranke formendes Element (68) aufweist.

12. Rotor (24) nach einem der vorhergehenden Ansprüche, **dadurch gekennzeichnet, dass** der Außenrand mindestens einer Seitenfläche (60) jedes Polzwischenraums (62) eine Randleiste (78) aufweist, die sich in Umfangsrichtung zum Inneren des Polzwischenraums (62) erstreckt, um das zugeordnete eine Magnetschranke formende Element (68) radial gegen die Zentrifugalkraft zu halten, wenn der Rotor (24) in Drehung ist.

13. Rotor (24) nach einem der vorhergehenden Ansprüche, **dadurch gekennzeichnet, dass** das eine Magnetschranke formende Element (68) ein Dauermagnet ist, insbesondere aus ferromagnetischem Material.

14. Rotor nach einem der vorhergehenden Ansprüche, **dadurch gekennzeichnet, dass** mindestens einer der Magnete in einem Polzwischenraum von mehreren Teilen geformt wird.

15. Verfahren zur Montage des Rotors (24) einer drehenden elektrischen Maschine (20) nach Anspruch 13 in Kombination mit einem der Ansprüche 1 bis 12,
**dadurch gekennzeichnet, dass** es einen ersten Schritt des Zusammenbaus (E1) der offenen Kette (80) von Magneten (68) auf dem Rotor (24) und einen zweiten Schritt der Magnetisierung (E2) der Magnete (68) aufweist.

16. Verfahren nach Anspruch 15, **dadurch gekennzeichnet, dass** der zweite Magnetisierungsschritt (E2) vor dem ersten Montageschritt (E1) durchgeführt wird, damit die radialen Polflächen (70) gegenüber den Magneten (68) der offenen Kette (80) Pole des gleichen Typs formen, die sich gegenseitig abstoßen.
